# EUROPÄISCHE PATENTSCHRIFT

(11) **EP 0 812 750 B1**
(45) Veröffentlichungstag und Bekanntmachung des Hinweises auf die Patenterteilung: **24.10.2001**
(21) Anmeldenummer: 97710014.8
(22) Anmeldetag: 04.06.1997
(51) Int. Cl.: B60T 17/08, F16J 3/02

(54) **Bremsmembran**
Brake diaphragm
Membrane de frein

(30) Priorität: 10.06.1996 DE 19623099
(43) Veröffentlichungstag der Anmeldung: 17.12.1997
(73) Patentinhaber: ContiTech Vibration Control GmbH, 30165 Hannover (DE)
(72) Erfinder: Stöter, Bernd, 30880 Laatzen (DE)

(56) Entgegenhaltungen:
- DE-A- 2 248 857
- DE-A- 3 730 827
- DE-A- 3 925 076
- DE-A- 4 241 537
- FR-A- 2 521 651

## Beschreibung

### Die Erfindung betrifft eine Bremsmembran für Druckmittel-Bremszylinder gemäß dem Oberbegriff des Patentanspruchs 1.

Wie bei solchen Bremsmembranen üblich, ist die erfindungsgemäße Membran durch eine im Mittelbereich ihres Bodens angebrachte Verstärkung für die spezifischen Anforderungen bei Federspeicher-Druckmittel-Bremszylindern ausgelegt, ohne daß hierdurch ihre Verwendbarkeit in Druckmittel-Bremszylindern ohne Federspeicher eingeschränkt wird. Derartige in Druckmittel-Bremszylindern mit und ohne Federspeicher einsetzbare Bremsmembranen sind beispielsweise aus den Druckschriften DE 42 41 537 A1, EP 0 115 262 A1 und EP 0 218 845 A1 bekannt, wobei der Durchmesser der besagten Bodenverstärkungen bei den in den beiden erstgenannten Schriften dargestellten Bremsmembranen geringfügig größer ist als der Durchmesser des zugehörigen, sie bei Aktivierung der Feststellbremse mit der Federkraft des Speichers beaufschlagenden Federspeicher-Stempels, und die genannten Durchmesser bei dem in der dritten Schrift dargestellten Ausführungsbeispiel etwa gleich groß sind.

Andere Bremsmembranen, die für die besonderen Beanspruchungen in Federspeicher-Druckmittel-Bremszylindern konzipiert sind, können den Druckschriften DE 39 25 076 A1 und US 3 107 583 A entnommen werden. Die besagten Bodenverstärkungen sind bei diesen Ausführungsformen als anvulkanisierte Elastomerauflagen größerer Härte und Biegesteifigkeit bzw. als starre, vom verstärkten Rand des Membranbodens her formschlüssig fixierte Kreisscheiben ausgebildet.

Ferner ist aus der DE 27 40 899 A1 eine Bremsmembran bekannt, die an ihrer Innenseite eine Verdickung aufweist, also an der Seite, die in Gebrauchslage an dem über eine Kolbenstange mit dem Bremsgestänge verbundenen Membranteller anliegt. Diese Bremsmembran ist jedoch für Druckmittel-Bremszylinder ohne Federspeicher konzipiert, und die vorstehend genannte Verdickung hat daher keine Bedeutung für ein Zusammenwirken mit einem Federspeicher-Stempel, sondern dient lediglich zur Zentrierung der Bremsmembran gegenüber einer entsprechenden Vertiefung im Membranteller.

Bisher sind an Bremsmembranen, die in Federspeicher-Druckmittel-Bremszylindern eingesetzt und durch eine von dem zugehörigen Federspeicher-Stempel beaufschlagbare Bodenverstärkung speziell für diesen Einsatz ausgebildet waren, gerade im Bereich ihrer Bodenverstärkung Defekte aufgetreten, und zwar riß das in die elastomere Beschichtung der Membran eingebettete Verstärkungsgewebe, in dem der Stirnfläche des Federspeicher-Stempels gegenüberliegenden, durch die Bodenverstärkung abgedeckten Bereich. Diese Defekte ließen sich nicht allein durch örtlich überhöhte Flächenpressungen oder als Folge hoher Kantenpressung bei schräger Beaufschlagung erklären.

Der Erfindung liegt die Aufgabe zugrunde, diese Defekte zu vermeiden.

Die Lösung dieser Aufgabe gelingt erfindungsgemäß durch eine Bremsmembran der eingangs genannten Art, die gemäß dem kennzeichnenden Teil des Patentanspruchs 1 ausgebildet ist. In den Unteransprüchen sind bevorzugte Ausführungsformen und vorteilhafte Weiterbildungen der Erfindung angegeben.

Es zeigte sich, daß die vorstehend beschriebenen Defekte darauf zurückzuführen waren, daß das elastomere Material der Bodenverstärkung unter der Druckeinwirkung des Federspeicher-Stempels so beiseitegedrückt wurde, daß bei den bisherigen Bremsmembranen eine überwiegend nach radial außen gerichtete Materialverdrängung erzeugt wurde, die das mit der Elastomerschicht fest verbundene Verstärkungsgewebe mitzog und in einer Zone maximaler Zugkräfte zu Geweberissen führte.

Die vorliegende Erfindung vermeidet derartige lokale Überhöhungen der auf das Gewebe einwirkenden Kräfte, indem sie für das Beschichtungsmaterial zusätzlichen Ausweichraum schafft - und zwar insbesondere im Zentrum der Bodenverstärkung - so daß sich am Gewebe eine gleichmäßigere Kräfteverteilung auf niedrigerem Niveau ergibt. Dies wird mit einer Bremsmembran der eingangs genannten Art erreicht, die gemäß dem kennzeichnenden Teil des Patentanspruchs 1 ausgebildet ist, bzw. mit deren in den Unteransprüchen angegebenen bevorzugten Ausführungsformen und vorteilhaften Weiterbildungen.

Zur näheren Erläuterung der Erfindung wird auf die Zeichnung verwiesen. In dieser zeigt
- Fig. 1: einen Teilschnitt durch einen Federpeicher-Bremszylinder mit einer erfinderungsgemäßen Bremsmembran, die zur Vereinfachung der Darstellung ohne Verstärkungsgewebe gezeichnet wurde,
- Fig. 2 a: einen Schnitt durch den mittleren Bereich des Membranbodens,

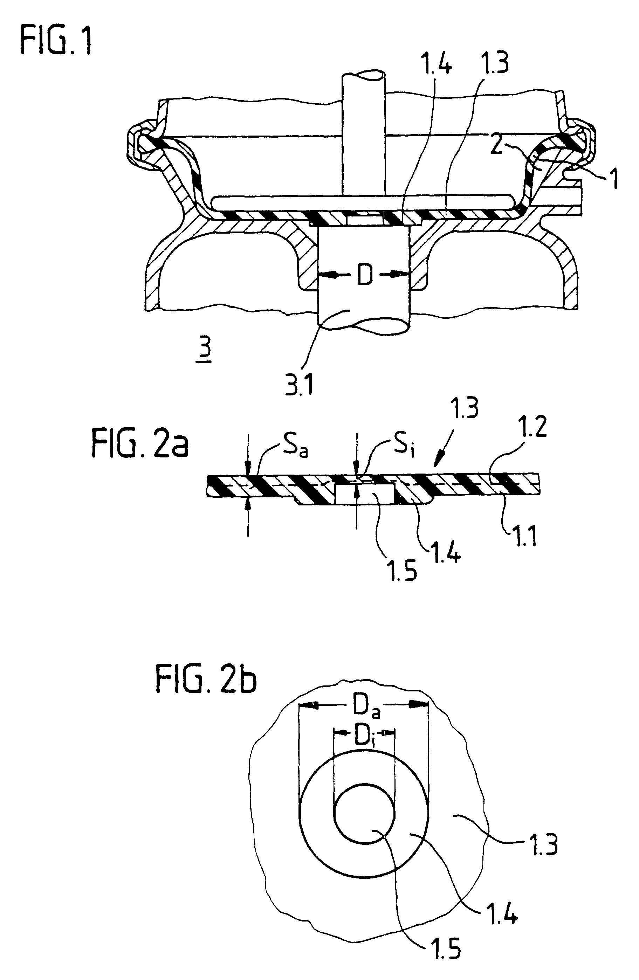

- Fig. 2 b: denselben Bereich des Membranbodens in einer Ansicht von der dem Federspeicher zugewandten Seite

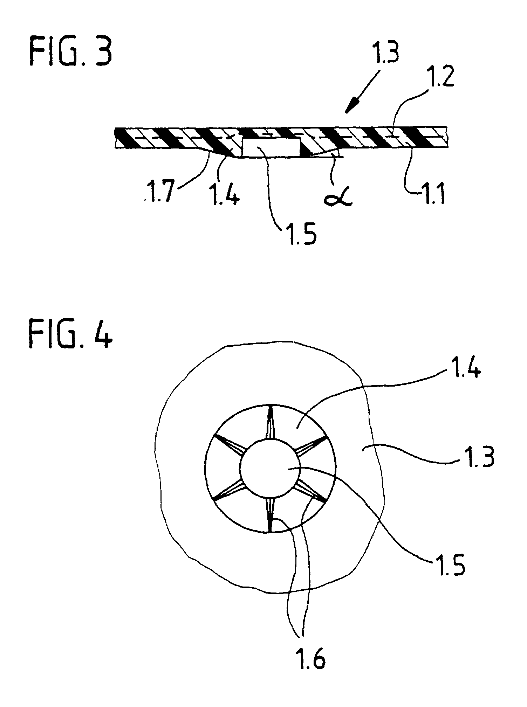

- Fig. 3: einen Schnitt durch eine bevorzugte Ausführungsform der erfindungsgemäßen Membran und
- Fig. 4: eine weitere vorteilhafte Variante der Erfindung, von der Federspeicherseite her gesehen.

Wie in Fig. 1 dargestellt, wird die erfindungsgemäße Bremsmembran 1 in üblicher Weise zwischen Ober- und Unterteil eines Bremszylinders eingespannt, wo sie mit ihrer in der Zeichnung nach unten weisenden Oberfläche dem Druckmittelraum 2 und dem Federspeicher 3 zugewandt ist. Der in den Fig. 2 a und 2 b vergrößert dargestellte Mittelbereich des Membranbodens 1.3, der ebenso wie die übrige Membran aus einem beidseitig mit einer elastomeren Beschichtung 1.1 versehenen textilen Flächengebilde 1.2 - im allgemeinen einem Gewebe - erzeugt ist, weist eine Bodenverstärkung 1.4 aus elastomerem Material auf, an der der Stempel 3.1 des Federspeichers, wie Fig. 1 zeigt, zur Anlage kommt.

Erfindungsgemäß ist im Zentrum 1.5 der Bodenverstärkung 1.4 innerhalb des Innendurchmessers Dᵢ die Wandstärke Sᵢ der Bremsmembran kleiner als die Wandstärke Sₐ außerhalb des Außendurchmessers Dₐ der Bodenverstärkung, und zwar ist Si vorzugsweise um mindestens 20 %, insbesondere um 30 bis 40 %, kleiner als Sₐ.

Für den Innendurchmesser Dᵢ der kreisringförmigen Bodenverstärkung 1.4 wird ein Wert von 20 bis 50 % ihres Außendurchmessers bevorzugt.

In einer zweckmäßigen, universell einsetzbaren Weiterbildung der vorliegenden Erfindung fällt die axiale Stirnfläche 1.7 der kreisringförmigen Bodenverstärkung 1.4 nach Art einer Kegelmantelfläche in radialer Richtung von innen nach außen ab, wobei der Neigungswinkel α der Kegelmantelfläche vorzugsweise 5° bis 10°, insbesondere ca. 7°, beträgt. Diese Maßnahme wirkt sich insbesondere bei Verwendung der erfindungsgemäßen Bremsmembran in Verbindung mit sogenannten S-Nockenbremsen vorteilhaft aus, bei deren Betätigung konstruktionsbedingt eine Auslenkung der mit dem Kolbenteller verbundenen Druckstange erfolgt, die mit einer Schrägstellung des Kolbentellers verbunden ist. Durch die erfindungsgemäße kegelige Ausbildung der Bodenverstärkung wird bewirkt, daß der Federspeicher-Stempel 3.1 auch bei Schrägstellung des Kolbentellers immer flächig an der kreisringförmigen Bodenverstärkung anliegt; es wird also vermieden, daß der Federspeicher-Stempel 3.1 nur mit der Außenkante seiner Stirnfläche örtlich begrenzt auf die Bodenverstärkung 1.4 einwirkt und daß die dabei auftretenden Belastungen die Membran verletzen.

Um dies unter allen Betriebsbedingungen sicherzustellen, ist der Neigungswinkel α der Kegelmantelfläche vorzugsweise geringfügig größer - insbesondere um 1 bis 2° größer - als die maximal auftretende Schrägstellung des Kolbentellers.

Eine weitere Vergleichmäßigung der Kräfteverteilung im Einwirkungsbereich des Federspeicher-Stempels 3.1 läßt sich erfinderungsgemäß dadurch erzielen, daß die kreisringförmige Bodenverstärkung 1.4 durch radial verlaufende Nuten 1.6 , die vorzugsweise einen V-förmigen Querschnitt aufweisen, in mehrere Sektoren unterteilt wird, wie Fig. 4 beispielsweise zeigt.

## Patentansprüche

1. Bremsmembran für Druckmittel-Bremszylinder mit oder ohne Federspeicher,
die aus einem mit einem Elastomer (1.1) beschichteten textilen Flächengebilde (1.2) geformt ist und im Mittelbereich ihres Membranbodens (1.3) an der in ihrer Gebrauchslage dem Druckmittelraum und ggf. dem Federspeicher zugewandten Seite eine Bodenverstärkung (1.4) in Gestalt einer kreisringförmigen Verdickung der Elastomerbeschichtung (1.1) mit einem Außendurchmesser (Dₐ) und einem Innendruckdurchmesser (Dᵢ) aufweist, wobei der Außendurchmesser (Dₐ) etwa dem Durchmesser (D) eines üblichen Federspeicherstempels (3.1) entspricht oder geringfügig größer ist als dieser
**dadurch gekennzeichnet,**
**daß** ihre Wandstärke (Sᵢ) innerhalb des Innendurchmessers (Dᵢ) der kreisringförmigen Bodenverstärkung (1.4) kleiner ist als ihre Wandstärke (Sₐ) außerhalb des Außendurchmessers (Dₐ) der Bodenverstärkung (1.4).

2. Bremsmembran nach Anspruch 1, **dadurch gekennzeichnet, daß** die Membranwandstärke (Sᵢ) innerhalb des Innendurchmessers (Dᵢ) der kreisringförmigen Bodenverstärkung (1.4) mindestens 20 % kleiner ist als die Membrandwandstärke (Sₐ) außerhalb der Bodenverstärkung.

3. Bremsmembran nach Anspruch 2, **dadurch gekennzeichnet, daß** die Membranwandstärke (Sᵢ) innerhalb des Innendurchmessers (Dᵢ) der kreisringförmigen Bodenverstärkung (1.4) 30 bis 40 % kleiner ist als die Membranwandstärke (Sₐ) außerhalb der Bodenverstärkung.

4. Bremsmembran nach einem der Ansprüche 1 - 3, **dadurch gekennzeichnet, daß** der Innendurchmesser (Dᵢ) der kreisringförmigen Bodenverstärkung (1.4) 20 bis 50 % des Außendurchmessers (Dₐ) der Bodenverstärkung beträgt.

5. Bremsmembran nach Anspruch 4, **dadurch gekennzeichnet, daß** der Innendurchmesser (Dᵢ) der kreisringförmigen Bodenverstärkung (1.4) 30 bis 35 % des Außendurchmessers (Dₐ) der Bodenverstärkung beträgt.

6. Bremsmembran nach einem der Ansprüche 1 - 5, **dadurch gekennzeichnet, daß** die axiale Stirnfläche (1.7) der kreisringförmigen Bodenverstärkung (1.4) nach Art einer Kegelmantelfläche in radialer Richtung von innen nach außen abfällt.

7. Bremsmembran nach Anspruch 6, **dadurch gekennzeichnet, daß** der Neigungswinkel (**α**) der Kegelmantelfläche 5° bis 10° beträgt.

8. Bremsmembran nach Anspruch 6, **dadurch gekennzeichnet, daß** der Neigungswinkel (**α**) der Kegelmantelfläche ca. 7° beträgt.

9. Bremsmembran nach einem der Ansprüche 1 - 8, **dadurch gekennzeichnet, daß** die kreisringförmige Bodenverstärkung (1.4) durch radial verlaufende Nuten (1.6) in Sektoren unterteilt ist.

10. Bremsmembran nach Anspruch 9, **dadurch gekennzeichnet, daß** die Nuten (1.6) einen v-förmigen Querschnitt besitzen.

## Claims

1. Brake diaphragm for pressure medium brake cylinders with or without spring-loading, which diaphragm is formed from a textile flat-shaped structure (1.2), which is coated with an elastomeric material (1.1) and has, in the central region of its diaphragm base (1.3), on the side facing the pressure medium chamber and possibly the spring-loading in its position of use, a base reinforcement (1.4) in the form of an annular thickening of the elastomeric coating (1.1) with an external diameter (Dₐ) and an internal diameter (Dᵢ), the external diameter (Dₐ) corresponding substantially to the diameter (D) of a conventional spring-loaded ram (3.1) or being slightly greater than the latter, **characterised in that** its wall thickness (Sᵢ) internally of the internal diameter (Dᵢ) of the annular base reinforcement (1.4) is smaller than its wall thickness (Sₐ) externally of the external diameter (Dₐ) of the base reinforcement (1.4).

2. Brake diaphragm according to claim 1, **characterised in that** the diaphragm wall thickness (Sᵢ) internally of the internal diameter (Dᵢ) of the annular base reinforcement (1.4) is at least 20 % smaller than the diaphragm wall thickness (Sₐ) externally of the base reinforcement.

3. Brake diaphragm according to claim 2, **characterised in that** the diaphragm wall thickness (Sᵢ) internally of the internal diameter (Dᵢ) of the annular base reinforcement (1.4) is 30 to 40 % smaller than the diaphragm wall thickness (Sₐ) externally of the base reinforcement.

4. Brake diaphragm according to one of claims 1 - 3, **characterised in that** the internal diameter (Dᵢ) of the annular base reinforcement (1.4) is 20 to 50 % of the external diameter (Dₐ) of the base reinforcement.

5. Brake diaphragm according to claim 4, **characterised in that** the internal diameter (D;) of the annular base reinforcement (1.4) is 30 to 35 % of the external diameter (Dₐ) of the base reinforcement.

6. Brake diaphragm according to one of claims 1 - 5, **characterised in that** the axial end face (1.7) of the annular base reinforcement (1.4) decreases outwardly from internally in the radial direction in the manner of a conical surface.

7. Brake diaphragm according to claim 6, **characterised in that** the angle of inclination (α) of the conical surface is 5° to 10°.

8. Brake diaphragm according to claim 6, **characterised in that** the angle of inclination (α) of the conical surface is approx. 7°.

9. Brake diaphragm according to one of claims 1 - 8, **characterised in that** the annular base reinforcement (1.4) is divided into sectors by radially extending grooves (1.6).

10. Brake diaphragm according to claim 9, **characterised in that** the grooves (1.6) have a V-shaped cross-section.

## Revendications

1. Membrane de frein pour un cylindre de frein utilisant un fluide sous pression avec ou sans ressort accumulateur, qui est formé d'une structure textile plane (1.2) recouverte d'un élastomère (1.1) et comporte, dans la partie médiane du fond (1.3) de la membrane, et ce au niveau du côté qui, dans la position d'utilisation de la membrane, est tourné, vers la chambre contenant le fluide sous pression et éventuellement vers le ressort accumulateur, un élément de renfort de fond (1.4) agencé sous la forme d'un épaississement en forme d'anneau circulaire du revêtement élastomère (1.1), possédant un diamètre extérieur (Dₐ) et un diamètre intérieur (Dᵢ), le diamètre extérieur (Dₐ) correspondant approximativement au diamètre (D) d'un poinçon usuel (3.1) du ressort accumulateur ou étant légèrement supérieur à ce dernier, **caractérisé en ce que** l'épaisseur de paroi (Sᵢ) Je la membrane à l'intérieur du cercle du diamètre intérieur (Dᵢ) de l'élément de renfort de fond en forme d'anneau circulaire (1.4) est inférieure à l'épaisseur de paroi (Sₐ) de la membrane à l'extérieur du cercle de diamètre extérieur (Dₐ) de l'élément de renfort de fond (1.4).

2. Membrane de frein selon la revendication 1, **caractérisée en ce que** l'épaisseur de paroi (Sᵢ) de la membrane à l'intérieur du cercle correspondant au diamètre intérieur (Dᵢ) de l'élément de renfort de fond en forme d'anneau circulaire (1.4) est inférieure, d'au moins 20 %, à l'épaisseur de paroi (Sₐ) de la membrane à l'extérieur de l'élément de renfort de fond.

3. Membrane de frein selon la revendication 2, **caractérisée en ce que** l'épaisseur de paroi (Sᵢ) de la membrane à l'intérieur du cercle correspondant au diamètre intérieur (Di) de l'élément de renfort de fond en forme d'anneau circulaire (1.4) est inférieure de 30 à 40 % à l'épaisseur de paroi (Sₐ) de membrane à l'extérieur de l'élément de renfort de fond.

4. Membrane de frein selon l'une des revendications 1-3, **caractérisée en ce que** le diamètre intérieur (Dᵢ) de l'élément de renfort de fond en forme d'anneau circulaire (1.4) est compris entre 20 et 50 % du diamètre extérieur (Dₐ) de l'élément de renfort de fond.

5. Membrane de frein selon la revendication 4, **caractérisée en ce que** le diamètre intérieur (Dᵢ) de l'élément de renfort de fond en forme anneau circulaire (1.4) est compris entre 30 et 35 % du diamètre extérieur (Dₐ) de l'élément de renfort de fond.

6. Membrane de frein selon l'une des revendications 1-5, **caractérisée en ce que** la surface frontale axiale (1.7) de l'élément de renfort de fond en forme anneau circulaire (1.4) s'abaisse dans une direction radiale, de l'intérieur vers l'extérieur, à la manière d'une surface en forme d'enveloppe conique.

7. Membrane de frein selon la revendication 6, **caractérisée en ce que** l'angle d'inclinaison (α) de la surrace en forme d'enveloppe conique est compris entre 5° et 10°.

8. Membrane de frein selon la revendication 6, **caractérisée en ce que** l'angle d'inclinaison (α) de la surface en forme d'enveloppe conique est égal à environ 7°.

9. Membrane de frein selon l'une des revendications 1-8, **caractérisée en ce que** l'élément de renfort de fond en forme anneau circulaire (1.4) est subdivisé en secteurs par des rainures radiales (1.6).

10. Membrane de frein selon la revendication 9, **caractérisée en ce que** les rainures (1.6) possèdent une section transversale en forme de V.
